Europäisches Patentamt

European Patent Office

Office européen des brevets

(11) Publication number: 0 689 130 A1

# EUROPEAN PATENT APPLICATION

(21) Application number: 95303610.0

(22) Date of filing: 26.05.95

(51) Int. Cl.⁶: G06F 9/38

(30) Priority: 21.06.94 GB 9412439

(43) Date of publication of application:
27.12.95 Bulletin 95/52

(84) Designated Contracting States:
DE FR GB IT

(71) Applicant: SGS-THOMSON
MICROELECTRONICS LTD.
1000 Aztec West,
Almondsbury
Bristol BS12 4SO (GB)

(72) Inventor: May, Michael David
9 Eaton Crescent
Clifton,
Bristol BS8 2EJ (GB)
Inventor: Sidwell, Nathan Mackenzie
21 Cleave Street
St. Werburghs,
Bristol BS2 9UD (GB)
Inventor: Sturges, Andrew Craig
3 Wellington Avenue
Montpelier,
Bristol BS6 5HP (GB)

(74) Representative: Driver, Virginia Rozanne et al
Page White & Farrer
54 Doughty Street
London WC1N 2LS (GB)

(54) Computer instruction pipelining

(57) A method of operating a computer system and a computer system itself are provided in which instructions are executed in a pipelined operation. The instructions comprise a first string of instructions including at least one dependent instruction which requires a result of execution of a preceding instruction in the first string and a second string of instructions which are not dependent on the result of execution of instructions in the first string. Successive stages of the pipelined operation are effected on successive instructions with a plurality of instructions being held in a pipeline simultaneously. Sequential results of instruction execution are written into a data store arranged to hold simultaneously more than one result on a first-in/first-out basis. Execution of the instructions of the second string are interleaved with instructions of the first string, so that at least one instruction of the second string is interposed between the dependent and preceding instructions of the first string. Execution of the dependent instruction includes obtaining from the data store a value derived from a result of execution of the preceding instruction.

In this manner a computer system and a way of operating a computer system is provided which enables high speed pipelined operations.

The invention relates to compressed instructions for a computer system and methods of using a computer system with compressed instructions.

In order to improve speed of operation of computer systems as well as space and power required by the hardware, there are advantages in using instructions having a short bit length. The speed and ease of decoding such instructions is improved as well as the access time necessary to obtain such instructions from memory. Furthermore, there are speed advantages in avoiding redundant operations during the processing sequence for a succession of computer instructions. A known technique in executing a sequence of instructions is to use a pipelined operation where the execution pipeline has a succession of stages so that several instructions may be handled simultaneously in the pipeline. While one stage of the pipeline is carrying out part of the execution process on one instruction another part of the process is handling a different stage of execution on a different instruction. Problems can however arise where a string of instructions for execution includes one or more dependent instruction. A dependent instruction means one which requires the result of executing a previous instruction in the string before the instruction can be executed. If a dependent instruction is positioned in the pipeline too closely behind an instruction from which it requires the result, then a delay or bubble in the pipeline may be caused while awaiting the result of the earlier instruction before the dependent instruction can be executed.

It is an object of the present invention to provide a computer system and a way of operating a computer system which enables high speed pipelined operation.

It is a further object of the invention to minimise bubbles which may occur in such pipelined operations for execution of computer instructions.

It is a further object of the invention to provide a pipelined operation which enables the use of short or compressed instructions.

The present invention provides a method of operating a computer system wherein instructions are each executed in a multistore pipelined operation, said instructions comprising a first string of instructions including at least one dependent instruction which requires a result of execution of a preceding instruction in said first string, and a second string of instructions which are not dependent on the result of execution of instructions in said first string, said method comprising effecting successive stage of said pipelined operation on successive instructions with a plurality of instructions in the pipeline simultaneously, writing sequential results of instruction execution into a data store arranged to hold simultaneously more than one result on a first in first out basis, and interleaving execution of instructions of said second string with instructions of said first string, thereby interposing at least one instruction of said second string between said dependent and said preceding instructions of said first string in the pipelined operation, execution of said dependent instruction including obtaining from said data store a value derived from a result of execution of said preceding instruction.

The present invention also provides a method of executing a sequence of computer instructions, each of said instructions being processed sequentially in one multistage pipelined operation including execution of each instruction and writing a result of execution, wherein said sequence includes a first string of instructions including at least one dependent instruction which requires a result of execution of a preceding instruction in said first string, and a second string of instructions which are not dependent on the result of execution of instructions in said first string, said first and second instruction strings are interleaved in said pipelined operation whereby the operation is started on each successive instruction before completion of an earlier instruction and at least one instruction of said second string is interposed between said dependent and said preceding instructions of said first string in the pipelined operation, and said writing comprises loading a plurality of results into a data store arranged to hold more than one result simultaneously on a first in first out basis, and execution of said dependent instruction includes obtaining from said data store a value derived from a result of execution of said preceding instruction.

Generally each of said first and second strings of instructions includes at least one dependent instruction which requires a result of execution of a preceding instruction in the same string, said first and second strings being interleaved so that between execution of said dependent and preceding instruction in each string there is interposed an instruction of the other string, thereby providing in said data store the result of said preceding instruction for each string before execution of the dependent instruction in the same string.

Preferably instructions in said first and second strings are interleaved in such a manner that the result of execution of a said preceding instruction is output from said data store in synchronism with execution of said dependent instruction of the same string.

When necessary, data required for the execution of one instruction is removed from said data store concurrently with writing the result of execution of a different instruction into said data store.

2

In some embodiments said data store comprises an implicit storage location not requiring address identification in the or each instruction.

It will be appreciated that this enables the use of shorter instructions not requiring address bits to address the storage location. In this case at least one instruction in said instruction sequence includes no address identification for data storage and logic circuitry in the computer system responds to said at least one instruction to access said implicit storage location.

In one embodiment said data store is provided by a plurality of registers and said registers are sequentially addressed during execution of a succession of instructions to provide access to said data storage location on a first in first out basis.

The invention also provides a computer system comprising memory for storing a plurality of instructions and processing circuitry connected to said memory for receiving instructions from said memory and executing them in sequence, said processing circuitry including multistage pipelined circuitry having decoding circuitry, execution circuitry and writing circuitry for writing a result of successive instructions executed by the processing circuitry, and a first in first out data store for holding simultaneously more than one result of an instruction execution, said data store being connected to said pipelined circuitry both to receive results of successive instruction executions, and to provide a source of data for use by said execution circuitry.

Preferably the system includes flow control circuitry for controlling flow of successive instructions through successive stages of said pipelined circuitry whereby successive instructions may be supplied to the pipelined circuitry before completion of execution of preceding instructions in the instruction sequence, and instructions are supplied one at a time to said execution and writing circuitry.

Some embodiments of the present invention will now be described by way of example and with reference to the accompanying drawings in which:

Figure 1 shows the format of a prior art instruction,

Figure 2 shows a variety of instruction formats for use in accordance with the present invention,

Figure 3 is a block diagram of a computer system in accordance with the present invention,

Figure 4 shows more detail of part of the instruction fetcher shown in Figure 3,

Figure 5 shows more detail of the instruction expansion unit shown in Figure 3,

Figure 6 shows in more detail the pipe unit of Figure 3,

Figure 7 shows a modified arrangement for the circuitry of Figure 5,

Figure 8 shows the pipelined operation of the apparatus of Figure 3,

Figure 9 shows a sequence of operation cycles of the pipeline of Figure 8 in accordance with the invention,

Figure 10 shows a sequence of operation cycles of the pipeline not in accordance with the invention, and

Figures 11a-11g show data storate in the pipe for cycles 4-10 of Figure 9.

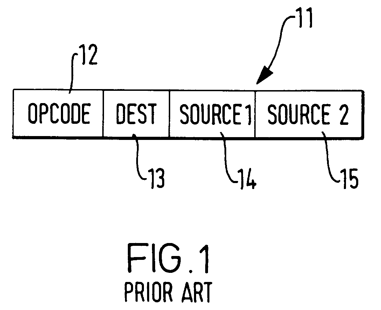

Figure 1 shows an instruction format for a conventional RISC processor system in which all instructions have a fixed length and generally similar format of bit locations in the instruction. The example shown consists of a single instruction 11 which in this example is 4 bytes long each byte being 8 bits long. The first byte 12 defines the opcode which defines the particular operation to be carried out by the processor when executing this instruction. The second byte 13 provides the address of the destination for the result of carrying out this instruction. Bytes 14 and 15 designate respectively the addresses of first and second sources of data to be used in carrying out the instruction. Typically bytes 13, 14 and 15 will all designate register addresses. Such instructions are simple to decode and thereby avoid unnecessary decoding time. However, many operands in instructions of this type are the addresses of temporary registers. Various proposals have been made to limit the number of addresses needed for temporary registers including for example the use of an accumulator with a field in each instruction specifying whether or not an operand identifies an accumulator or an explicit register. This may result in fixed length instructions of the type shown in Figure 1 having a number of redundant bit locations. This results in reduction of code density in that the bit locations needed to hold an instruction sequence are unnecessarily increased thereby taking up more memory space and taking up more memory access time in obtaining the instructions for use by the processor.

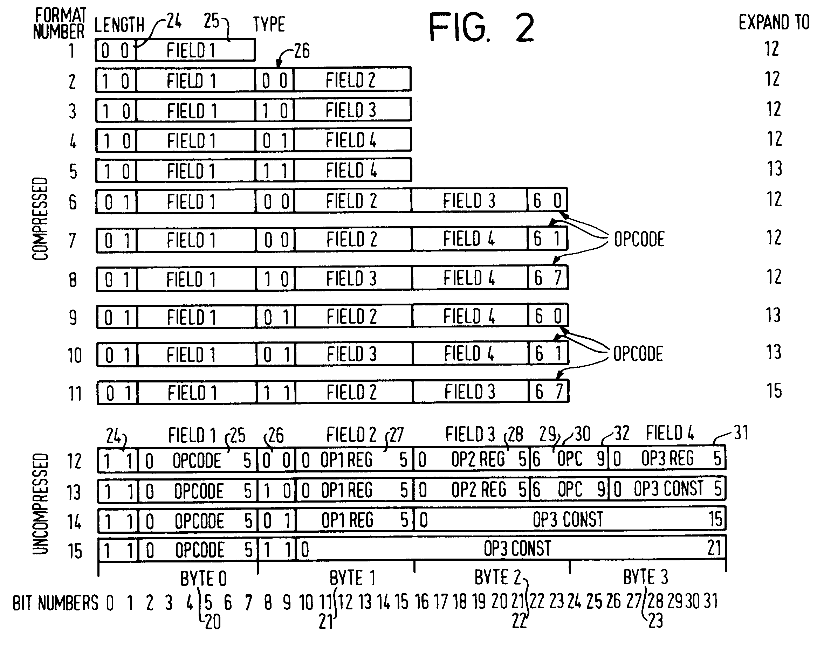

The present invention uses an instruction set providing variable length instructions. In the preferred example described a variety of formats of instruction for use by a single processor is shown in Figure 2. This particular example uses a plurality of selectable instructions of different bit length, each being based on a format of predetermined bit length and a predetermined sequence of instruction fields each of a respective predetermined bit length, some of the instructions omitting a selected one of the fields and including an identifier of less bit length than the omitted field to indicate which field is omitted, thereby compressing the bit length of the instruction and avoiding the use of redundant bit locations in the instructions. In this particular example shown the instructions are based on a 32 bit format divided into 4 bytes 20, 21, 22 and 23 each of 8 bits. This format will be described with reference to format 12 shown in Figure 2 as this illustrates the basic uncompressed format. The first byte 20 has the first two bit locations allocated to a length indicator 24. The next 6 bits form field 1 which is an opcode indicator 25 indicating the particular operation which the processor is to carry out in response to execution of the instruction. The first field in the instruction format is provided for all instructions at the same bit locations and always indicates the opcode.

In the second byte 21 the first two bit locations form an indicator 26 indicating the type of instruction. These two bits 26 taken together with the instruction bit length indicator 24 provide an indication of which fields are present and which have been omitted in the instruction. The next 6 bits of the second byte 21 form a second field 27. In the third byte 22 the first 6 bits define a third field 28. The last two bits 29 and 30 can, depending on the type of instruction, provide extensions of the opcode indicator or type of instruction indicator or part of a constant. In the fourth byte 23 the last 6 bits form the fourth field 31. The first two bits 32 of the last byte 23 may form part of constant values or extensions of the opcode indicator. Figure 2 shows 15 different formats which may all be based on the four field format shown in format 12 of Figure 2. Each of the selectable formats either fully includes or fully omits each of the second, third or fourth fields. The type indicator 26 (and extension bit 30) in combination with the length indicator 24 provides an indication of which fields have been omitted. They may also provide an indication of the designation of data in an included field thereby indicating a register or a constant value. In addition to allowing compression of the bit length of each instruction to avoid redundant bits, this example allows the identification of an implicit data storage location which does not require explicit addressing. The basic format of the instructions used is best illustrated by reference to format 12 in Figure 2. The length indicator 24 indicates that it is a 32 bit long instruction. The opcode 25 defines the operation to be carried out. The type indicator 26 indicates that in the case of a 32 bit long instruction the second field 27 will identify the address of a destination register, the third field 28 will identify the address of a second source register and the fourth field 31 will identify the address of a first source register. The last two bits of the third byte 22 and the first two bits of byte 23 will in this case provide the facility for an extension 32 of the opcode 25. For some instructions it is not necessary to identify two source addresses and a destination address and in such cases one or more of the second, third or fourth fields can be omitted so as to compress the bit length of the instruction and avoid redundant bit locations. Furthermore, the example described includes the use of an implicit data store for holding live data during a program execution sequence where the data store does not require any explicit addressing. In this example the implicit store is provided by a first in first out data store arranged to hold simultaneously a plurality of data values and in this example such a data store is referred to as a pipe. The pipe may be used as a destination or as a first or second source of data, or any combination of them, for use in execution of the program sequence. If the pipe is to be used for any of the destination, source 1 or source 2 addresses then no entry is required in the corresponding second, third or fourth fields of the instruction format shown in Figure 2. In the case of format 1 the instruction length indicator 24 indicates that the instruction is only 1 byte long and consequently fields 2, 3, and 4 are missing thereby indicating that the implicit pipe is to be used for both source and destination addresses. In the case of formats 2, 3, 4 and 5, the bit length indicator indicates that the instruction is now 2 bytes long and the type indicator 26 distinguishes between formats 2, 3, 4 and 5. In format 2 field 2 indicates a destination address. In format 3 field 3 indicates a second source address and in format 4 field 4 indicates the first source address. In each of formats 2, 3 and 4 the implicit pipe is understood to replace the omitted addresses. When expanded each of formats 1 to 4 will take the form of format 12. Format 5 shows a situation where the type indicator shows that field 4 provides a constant value instead of a first source address. Format 5 will be expanded to format 13. Formats 6 to 11 each have a length indicator 24 indicating that the instructions are 3 bytes long and the type indicators 26 together with the last bit location 30 indicate the significance of the included fields as well as an indication of the omitted field. In each case the implicit pipe is used in place of any omitted address. Formats 6, 7 and 8 will be expanded to format 12. Formats 9 and 10 will be expanded to format 13. Format 11 will be expanded to format 15. In the case of formats 12 to 15 the length indicator indicates that the instruction has a length of 4 bytes. In the case of formats 13, 14 and 15 the instruction omits one or more explicit addresses and the bit locations are replaced by constants 33 or 34 or 35. On expansion the implicit pipe address will be provided for each missing field. In the subsequent description the bit value provided by bits 10-15 is referred to as Arg 1, the bit value of bits 16-21 is Arg 2 and the bit value of bits 26-31 is Arg 3. Eight examples of instruction having 1, 2 or 3 Arguments are illustrated in the following table which also shows the source and destination addresses indicated by each of these instructions as well as the byte length and format corresponding to Figure 2.

TABLE A

| Example | Format | Destination | Source 2 | Source 1 | Byte Length |
|---------|--------|-------------|----------|----------|-------------|
| 0 | 1 | PIPE | PIPE | PIPE | 1 |
| 1 | 2 | ARG 1 | PIPE | PIPE | 2 |
| 2 | 3 | PIPE | ARG 1 | PIPE | 2 |
| 3 | 4 | PIPE | PIPE | ARG 1 | 2 |
| 4 | 6 | ARG 1 | ARG 2 | PIPE | 3 |
| 5 | 7 | ARG 1 | PIPE | ARG 2 | 3 |
| 6 | 8 | PIPE | ARG 1 | ARG 2 | 3 |
| 7 | 12 | ARG 1 | ARG 2 | ARG 3 | 4 |

It will therefore be seen that in the compressed instruction formats shown in Figure 2 the type indicator 26, including when appropriate the extension 30, has a bit length substantially less than the omitted fields 2, 3 and 4. The use of predetermined field positions each of predetermined bit length provides simplicity and thereby speed in decoding. Each instruction is compressed to a minimum bit length to indicate the information necessary for execution of the instruction. Consequently memory space for storing an instruction sequence and access time for transferring instructions from memory to the processor are minimised. Each instruction fetch operation from memory will load into the processor a fixed number of bytes and in the case of compressed instructions the overall byte package fetched from memory may include part of a subsequent instruction occupying bit locations unused by the next instruction.

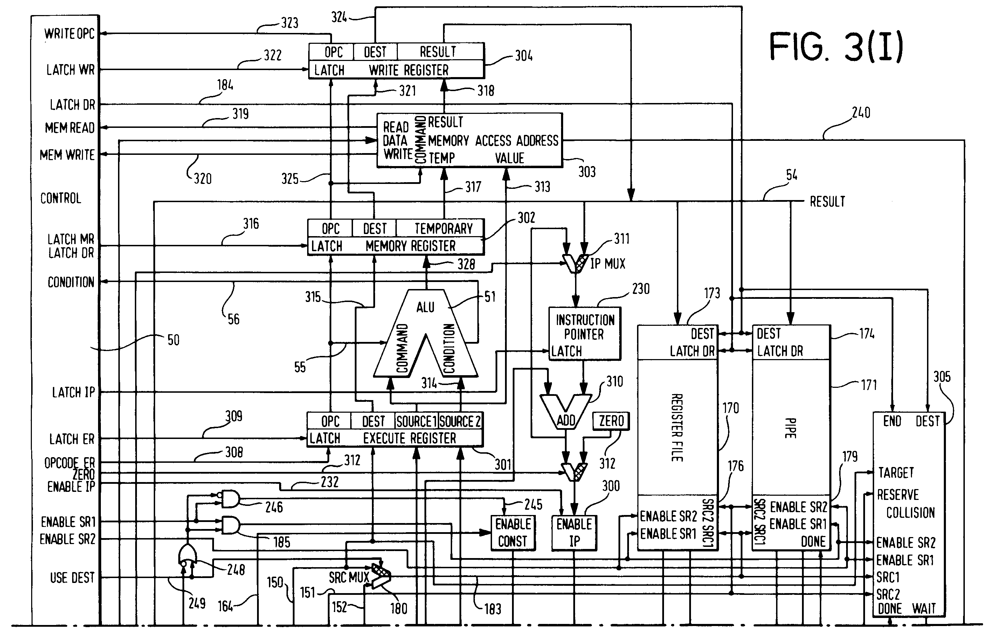

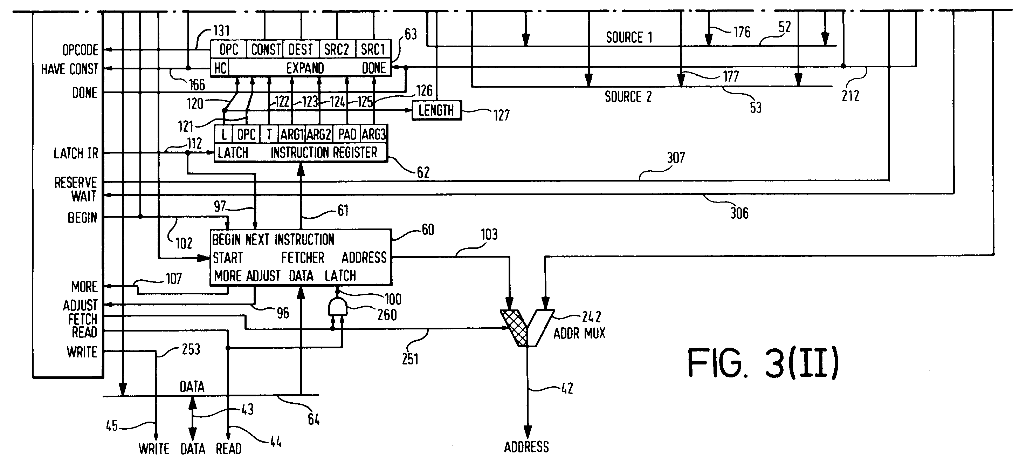

A computer system for use in executing instructions of the type shown in Figure 2 is illustrated in Figure 3. This shows processor circuitry 40 coupled to a memory 41 which in this example comprises a conventional RAM. The processor 40 includes an address bus 42, a data bus 43 as well as read and write controls 44 and 45 respectively, all coupled to the memory 41. The memory 41 is arranged to hold program comprising sequences of instructions at different addressable locations. Each instruction conforms to one of the formats already described with reference to Figure 2. The memory 41 may also hold data. The processor 40 includes control logic 50 as well as an ALU 51. The data bus 43 carries data values to and from the memory 41. The address bus carries memory address values for read or write operations. Read and write lines 44 and 45 form outputs from the control circuit 50. When the read line 44 is asserted the memory 41 supplies to the data bus 43 the value stored at the location identified by the address on bus 42. When the write line 45 is asserted the memory 41 will store the value on the data bus 43 into the memory location identified by the address on bus 42.

The processor 40 includes an instruction fetching unit 60 arranged to fetch 4 bytes at a time from the memory 41 and to provide a 4 byte output 61 to an instruction register 62 where the output 61 is aligned with the beginning of an instruction. The instruction register 62 is arranged to provide a plurality of separate outputs representing each of the fields and control bits of an instruction to an expand circuit 63 which is arranged to provide a fully expanded output for each instruction.

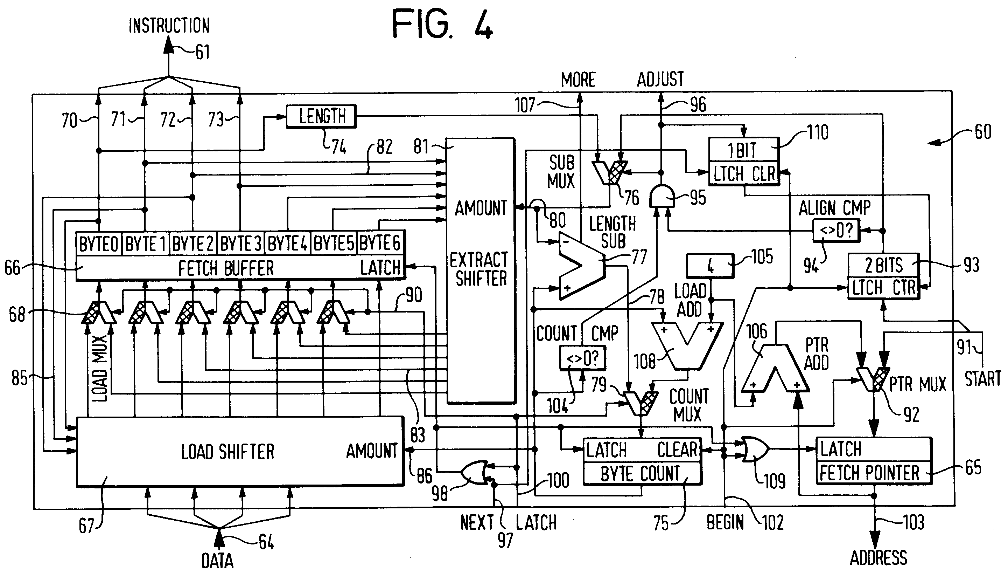

The construction and operation of the instruction fetcher 60 will be described first. The unit is shown in more detail in Figure 4 and has an input data bus 64 which is connected to the data bus 43. The fetcher 60 includes a fetch pointer 65 which comprises a 32 bit latch containing the next address in memory from which a 32 bit word is to be read. When a value is read from memory, latch 65 is increased by 4 bytes to a new pointer address. A value 4 is generated by unit 105 which supplies the value 4 to an adder 106 which receives the pointer value from bus 103 and adds 4 to it. The total is then sent through multiplexer 92 to the latch 65 to update the pointer. It will be understood that an aligned instruction is one which has its bit 0 position at the beginning of a new 32 bit word. However due to the use of variable length instructions some instructions will commence partway through a word in memory. The fetcher 60 is arranged to read compressed instructions from memory and to correctly align them and then output them on bus 61 from a fetch buffer 66 to the instruction register 62. The 4 byte words which are input on bus 64 pass through a load shifter 67 through a plurality of parallel multiplexers 68 to the fetch buffer 66. The fetch buffer may hold up to 7 bytes of instructions which is sufficient to hold the worst case of instruction mis-alignment. A 4 byte instruction could start 1 byte into a 32 bit memory word such that the word contains 3 bytes of the instruction and a subsequent word of 4 bytes must be read in order to obtain the 4th byte necessary to complete the instruction. In this way 7 bytes need to be held in the buffer 66. Once an instruction is aligned in the buffer 66, four bytes are output on lines 70, 71, 72 and 73 representing byte 0, byte 1, byte 2 and byte 3. Depending on the length of the instruction it may be that the instruction buffer 62 does not act on signals derived from all four lines 70-73 but in all cases outputs are provided on these lines. Byte 0 will indicate on line 70 the length of the instruction which is output and this is fed through a length indicator 74 to indicate to the fetcher unit 60 how many bytes in the buffer 66 can now be removed. A byte counter 75 holds a count of the number of bytes in the buffer 66 at any one time and the length signal derived from unit 74 is passed through a multiplexer 76 to a length subtractor 77 which receives inputs from multiplexer 76 and from the byte counter 75 in order to calculate the number of valid bytes remaining in the buffer 66. An output 78 from the subtractor 77 is supplied through a multiplexer 79 to update the input in the byte counter 75. The output from the multiplexer 76 forms an input 80 to an extract shifter 81 which is used to relocate in the buffer 66 those remaining bytes which will be required for use in the next instruction to be supplied on bus 61 to the instruction register 62. The extract shifter 81 receives inputs 82 from each of lines 71, 72, 73 as well as from the byte 4, byte 5 and byte 6 locations of the buffer 66. Depending on the Amount signal 80, the values held in the fetch buffer 66 are relocated by the extract shifter 81 and output on lines 83 to the multiplexers 68. In this way the bytes which are still required in the fetch buffer are relocated into the fetch buffer 66 at new locations starting at byte 0. The values held in byte 0, 1 and 2 of the buffer 66 are also fed back on lines 85 to the load shifter 67. The load shifter also receives an amount signal 86 derived from the byte counter 75 to indicate the byte locations within the fetch buffer 66 into which new bytes read from memory on data bus 64 are to be loaded. Depending on the Amount signal 86, four new bytes from memory are input on bus 64 and fed to the appropriate multiplexers 68 in combination with any signals on lines 85 giving byte values which are to be retained from a previous operation of the fetch buffer 66 so that the multiplexers 68 can be operated by a latch signal 90 to load into the buffer 66 the combination of retained bytes on any of lines 85 together with new bytes read from memory such that they occupy consecutive byte positions in the fetch buffer 66 starting at byte 0. The latch signal 90 is also fed to the multiplexer 79 to update the byte counter 75 by four. The value 4 is fed from unit 105 to an adder 108 which adds 4 to the byte count fed in from the byte counter 75 and feeds the total to the byte counter 75.

Normally the fetch pointer 65 will cause the fetcher 60 to obtain instructions from sequential word locations within memory. However some programs will contain branch instructions requiring the mechanism to start fetching instructions from a new location in memory. For this reason a Start input 91 is provided which can be fed through the multiplexer 92 to the fetch pointer 65. The top 30 address bits of the start address on line 91 are fed to the pointer 65 as those 30 bits will always address the beginning of a new 4 byte word in memory. The bottom two bits of the Fetch pointer 65 are always set to zero. The bottom 2 bits which will only indicate a sub-position within a 32 bit word are stored in a 2 bit latch 93. The value held in the latch 93 is tested in a comparator 94 to detect inequality with zero and thereby decide whether or not the new memory address does start at the beginning of a 32 bit boundary or partway through a word. In the event of it starting partway through a word a signal is provided from the comparator 94 to the AND gate 95 to indicate, when a second input to the AND gate 95 from a comparator 104 indicates that the number of bytes in the buffer 66 is not zero, that some adjustment of the contents of the fetch buffer is necessary. An Adjust output 96 is provided to the control unit 50 indicating that the instruction is not correctly aligned and to align it a dummy instruction read is carried out using a Next signal 97 from the control unit 50. The signal 97 is fed through an OR gate 98 to cause a new latching operation for the fetch buffer 66 which as described above will cause removal of one or more bytes from the fetch buffer 66 and relocation by an amount determined by the input 80 to the extract shifter 81, the amount being derived from the two bit latch 93 which is routed through the multiplexer 76 by the output of the AND gate 95.

It will be appreciated that the Next input 97 is also derived from the control unit 50 to inform the fetcher unit that the current instruction has been read from the fetch buffer 66 and consequently that instruction can be removed from the Fetch buffer 66 as described above. A latch input 100 is derived from the control unit 50 which is an edge sensitive signal to instruct the fetcher to store the value on the data bus 64 into the buffer 66. A Begin signal 102 is a further edge sensitive signal used to inform the fetcher to start fetching a new word from a new address presented on the Start signal input 91 in response to a branch instruction. It will be appreciated that the address output 103 always points to a 32 bit boundary at the beginning of a word in memory. The byte counter 75 is connected to the count comparator 106 to provide a signal to the AND gate 95 provided the byte count is not 0. The length subtractor 77 is arranged to provide a More output 107 whenever the fetch buffer has insufficient content to produce the next instruction. This signal 107 is supplied to the control unit 50 to cause the fetcher to perform a memory read using the latch signal 100 before the next instruction can be read from the fetcher. The byte counter 75 has the count reduced whenever an instruction is removed from the fetch buffer 66 and increased whenever a new value is read from memory. When the fetcher starts from a new instruction sequence using the Start input 91, the Begin signal on line 102 is used to clear the count in the counter 75, and via an OR gate 109 is used to latch new pointer values in the fetch pointer 65. A single bit latch 110 is used to clear the 2 bit latch 93 after the first instruction from a new start address has been aligned in the buffer 66.

It will be understood that the three input signals Next 97, latch 100 and Begin 102 which are derived from the control unit 50 are not usually asserted until some operation of the fetcher is required. The four types of operation which it may perform are as follows. It may produce instructions on the output bus 61 to the instruction register 62. It will do this when a correctly aligned instruction is held in the fetch buffer 66 and the More Signal 107 and Adjust signal 96 are not asserted. The fetcher may perform a read operation from memory locations. Normally 32 bit memory locations are read sequentially whenever the fetch buffer 66 does not contain enough data. The address for which data is read will be indicated by the fetch pointer 65 output on bus 103. This will be done when the More signal 107 is asserted and the Adjust signal 96 is not asserted. The latch signal 100 will be asserted to set the multiplexers 68 to select outputs from the load shifter 67. Once data is input from bus 64 the latch signal 100 is deasserted in order to store the value in the fetch buffer 66.

The fetcher can be used to initialise a new instruction sequence. In this case the byte count 75 is cleared and a new address in memory is latched into the fetch pointer 65 and 2 bits buffer 93. This initialisation will be required after a program branch instruction. It is performed by asserting and then deasserting the Begin signal 102. Furthermore, the fetcher can be used to align the first instruction in a new instruction sequence. If a new instruction sequence does not start at a 32 bit word boundary in memory then the Adjust signal 96 will be asserted and the alignment operation will involve asserting and then deasserting the Next signal 97 in order to perform a dummy read of the fetch buffer 66, and thereby align the first instruction of the new sequence.

As shown in Figure 3, the output bus 61 of the fetcher unit 60 provides a 32 bit signal which is fed into the instruction register 62 and the 32 bit value is latched by an input signal 112 which is derived from the control unit 50 at the same time as the Next signal 97 which was fed to the fetcher 60. The 32 bit signal in register 62 is arranged to provide seven output signals 120, 121, 122, 123, 124, 125 and 126. The nature of these output signals will be described with reference to Figure 2. Signal 120 represents bits 0 and 1 corresponding to the length indicator in Figure 2. Signal 121 is derived from bits 2 to 7 and represents field 1 which contains the opcode. Output 122 represents bits 8 and 9 which form the type indicator 26 shown in Figure 2. Output 123 is Arg 1 representing bit positions 10 to 15. Output 124 is Arg 2 representing bit positions 16 to 21. Output 125 represents bit positions 22 to 25 and is referred to as PAD and represents a type extension, part of the opcode or part of a constant value. Output 126 represents Arg 3 and represents bit positions 26 to 31. It would therefore be seen that output 121 represents field 1 in Figure 2 and always indicates the opcode. Fields 2, 3 and 4 referred to in Figure 2 will be represented by either Arg 1, Arg 2 or Arg 3 depending on the length of the instruction. Each of the outputs 120-126 are fed to an instruction expansion unit 63 which is arranged to reconstruct the full instruction from the compressed form supplied to it. The length indicating output 120 is also fed to a length enable unit 127 connected to the Source 1 bus 52.

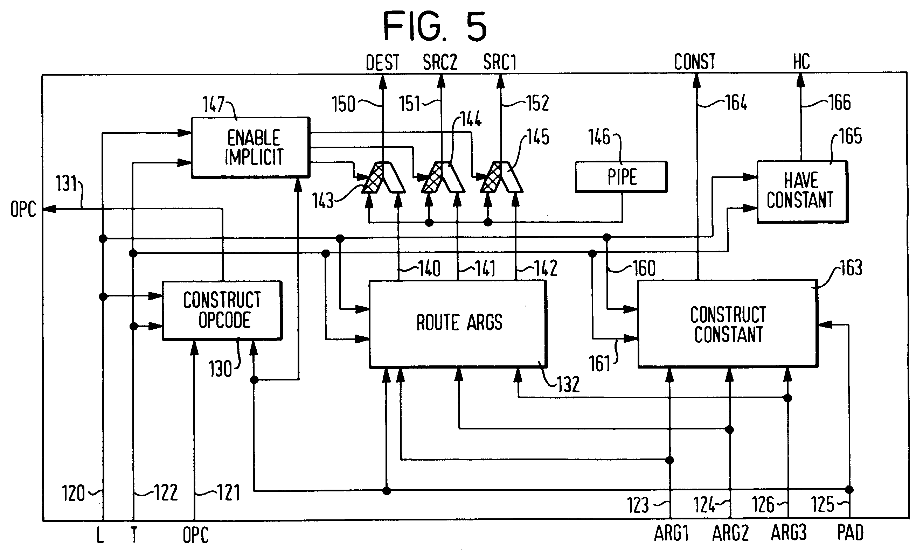

The construction and operation of the expansion unit 63 will be described with reference to Figure 5. A unit 130 is provided to construct the full opcode. Unit 130 receives the opcode input 121 and is also connected to the PAD input 125 as in some formats the PAD signal may include an opcode extension. The length input 120 and type input 122 are both connected to the unit 130 in order to determine whether the unit 130 incorporates any signal from the PAD input 125 in constructing the opcode. The fully constructed opcode is then output on line 131 which is fed to the control unit 50 to control the operation carried out by the processor. A router unit 132 is arranged to receive each of the Arg 1, Arg 2 and Arg 3 inputs 123-126. The router 132 also receives inputs from the length and type signals 120,122 so as to determine which of the inputs 123, 124 and 126 represent Destination or Source 1 or Source 2 outputs. The routed 132 also receives the PAD signal 125 as in some formats this contains a TYPE extension. The router 132 has a first output 140 corresponding to a destination address a second output 141 corresponding to a Source 2 address and a third output 142 corresponding to a Source 1 address. The length and type inputs 120 and 122 and PAD input 125 which are fed to the router 132 enable the router to output the correct input signals 123 to 126 or the respective outputs 140 to 142 and these are fed to respective multiplexers 143, 144 and 145. The multiplexers each receive an alternative address indicating the pipe address determined by a pipe addressing unit 146. The operation of the multiplexers 143-145 is controlled by an enable unit 147 having inputs from the length and type indicators 120 and 122 and PAD 125. Those input signals determine whether or not any of the fields in the compressed instruction are missing and it replaces any missing field by the implied pipe address 146. In this way output signals 150, 151 and 152 from the expansion unit indicate an appropriate destination address Source 1 and Source 2 address with the pipe address being provided for any implied address not explicity given in the compressed instruction. In the event that the instruction includes a constant value as is indicated in the formats of Figure 2, then any of Arg 1, Arg 2 and Arg 3 as well as PAD may be used to construct the constant dependent on the length and type indicators 120 and 122. These are fed to a constant constructor 163. If the input signals 160 and 161 indicate that a constant is to be constructed the inputs 123 to 125 are combined as required to output a constant value on output 164. The length and type indicators 120 and 122 are also fed to an indicator unit 165 to output a signal 166 indicating that a constant is present. Signal 166 is fed to the control unit 50 and the constant value is fed a line 164 to a constant register 167. When the PAD signal 125 contains a TYPE extension, its value does not determine whether a constant is encoded as is shown in Figure 2.

The processor includes a register file 170 holding a set of addressable registers. In addition the implied data storage location is provided by the pipe 171 which provides a first in first out data store for a plurality of data values. The register file 170 has a pointer circuit 173 connected to the bus 54 to allow data values to be written into the register file. Similarly the pipe 171 has a selector circuit 174 to allow data values to be written from the result bus 54 into a desired location in the pipe 171. Both the pointer circuit 173 and selector circuit 174 are arranged to receive a latch signal 184 from the control unit 50 when it is required to write data into a storage location. Similarly both the pointer 173 and selector 174 are connected to the output 150 of the instruction expansion unit 63 so that the appropriate store is used as a destination for data when so indicated by the output of an expanded instruction from the expansion unit 63. To allow data to be read from the register file 170 onto the source buses, an output selector 175 is provided which is connected by line 176 to the source 1 bus 52 and by a connection 177 to the source 2 bus 53. The correct register for use in a read operation is determined by the source 1 or source 2 addresses provided by the expansion unit 63. Line 151 provides a direct connection of the source 2 address to both the output selector circuit 175 of the register file 170 and to an output selector circuit 179 of the pipe 171. The source 1 address which is output on line 152 from the expansion unit 63 passes through a multiplexer 180 having its output connected to both selectors 175 and 179. The multiplexer 180 also has an input from the destination line 150 from the expansion unit 63 so that the destination address can be supplied in place of a source 1 identification. The selector 175 has a first enable input 182 to enable a read operation onto the source 1 bus. The enable signal 182 is derived from the control unit 50 through an AND gate 185. A second enable input 186 is arranged to enable a read operation onto the second source bus 53 and is derived directly from the control unit 50. The enable inputs 182 and 186 are similarly provided to the output selector 179 of the pipe 171.

The construction and operation of the register file 170 is conventional.

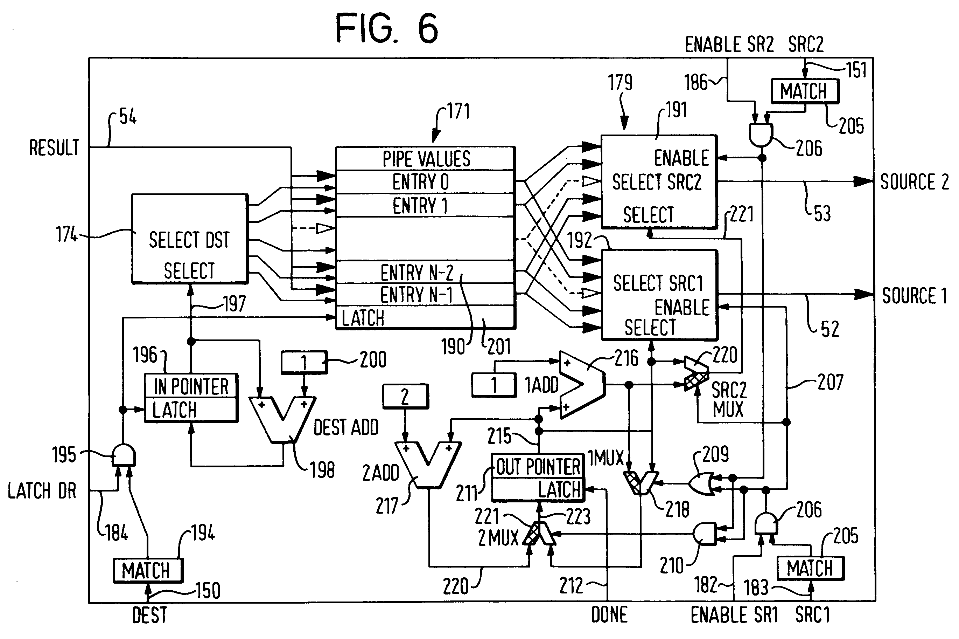

The construction and operation of the pipe 171 will be described in more detail with reference to Figure 6. The pipe 171 comprises a plurality of separately selectable data stores 190 arranged to hold N data values. The result bus 54 is connected to each of the data stores 190 and the destination selector 174 is coupled to each data input to determine which data store may accept an input from the result bus 54. Similarly each data store 190 is collected to two separate output selectors 191 and 192. The two output selectors are similar and are each connected to each data store location and may connect any one of the data locations to the respective source 1 bus 52 or source 2 bus 53. When writing to the pipe the destintation signal 150 is input to the pipe where the destination address is compared in a match unit 194 with a designated address for the pipe to ensure that the instruction requires use of the pipe as the destination. It will be understood that the destination signal will also be fed to the input selector for the register file 170 but will be ignored by the register file 170 as no match will be found. Provided a match is found by unit 194 an input is provided to AND gate 195 also arranged to receive the latch signal unit 184 from the control unit 50 so that the relevant destination is only selected when the correct latch signal is asserted as well. The selector 174 operates in a cyclic manner to write data into successive data locations of the pipe 171. An In Pointer 196 always contains the address in the pipe 171 of the next entry to write to. This address is input on line 197 to the selector 174 so as to select the required address for the next writing operation. Signal 197 is also fed to an adder 198 having as a further input a signal from an Add 1 unit 200. The output of the adder is fed back to the pointer circuit 196 which receives a latching signal from the AND gate 195 so as to advance the pointer address by one after each new latching operation to write data into the pipe 171. When a value is to be written into the pipe, the latch signal 184 is initially asserted. The output of the AND gate 195 is fed to a latch circuit 201 in the pipe 171. When the latch signal 184 is deasserted the value of the result bus 54 is stored in the selected location of the pipe 171 and the address of the next entry to write to is stored in the pointer 196.

During a read operation, the source 1 and source 2 addresses on lines 151 and 183 are fed to the register file 170 and to the pipe 171. As the designated pipe address will not match an address in the register file 170 reads from the pipe will be ignored by the register file 170. The input addresses are compared in the pipe 171 with designated addesses of the pipe in further match units 205 similar to match unit 194. The output of each match unit 205 is fed to an AND gate 206 which receives the respective enable input 182 or 186. In the case of the source 1 circuitry, the output of the AND gate 206 forms an enable signal 207 to the source 1 selector 190 as well as an input to an OR gate 209 and an AND gate 210. An Out Pointer circuit 211 is arranged to receive a Done signal 212 from the control unit 50. The pointer 211 holds the address of the location 190 in the pipe 171 from which the next entry is to be read. The output 215 from the pointer is fed to a first adder 216 and to a second adder 217. Adder 216 allows a value of 1 to be added to the signal and fed to a multiplexer 218 under the control of an output signal from the OR gate 209. The other adder 217 is arranged to add a value of 2 to the signal on line 215 and provides an output 220 which is an increment of 2 to the output signal 215 for the pointer circuit 211. A multiplexer 221 controlled by an output from the AND gate 210 controls the input 223 to the pointer circuit 211 such that the pointer receives either an input from line 220 which is an increment of 2 in the location to be read from or alternatively an output from the multiplexer 218. The output of the multiplexer 218 may either be the output signal 215 itself with zero increment or alternatively an increment of 1 effected by the adder 216. In operation to effect a read from the pipe 171, the source 1 output 52 is defined to be accessed before source 2 output 53 should both be active. For this reason the output pointer value 215 is fed directly to the output selector 192 to select the pipe location to be read from when appropriate signals are received on inputs 182 and 183. The signal on line 207 will determine whether a read operation is effected to the source 1 bus 52 and that signal is also fed to a multiplexer 220 to select either the output signal 215 from the pointer 211 or alternatively the increment of 1 produced by the adder 216 in order to provide the location selection which is input on line 221 to the selector circuit 191. In this way, a read operation may be effected on source bus 53 when appropriate input signals are provided on inputs 186 and 151. The selector 191 will output from the location indicated by line 215 from the pointer 211 if no read operation was effected onto the source 1 bus 52. If however the signal on line 207 had caused a read operation onto source 1 bus 52 then multiplexer 220 will be operated to increment by 1 the location from which the read operation is effected by selector 191 onto source 2 bus 53. The output signal from AND gate 206 which is used to cause a read operation onto the source 2 bus is also fed to the OR gate 209 to control the multiplexer 218 and AND gate 210 to control the multiplexer 221 in advancing the location indicated by the pointer 211 for the next read operation. If no read operation occurred the output signal 215 from the pointer 211 is fed back through multiplexers 218 and 221 with no change in location. If a read onto only one source bus occurred then the output of adder 216 is fed through multiplexers 218 and 221 to advance the pointer location by 1. If a read operation occurred onto both source buses 52 and 53 then the location identified by the pointer 211 is advanced by 2 by using the output of the adder 217 fed on line 220 through multiplexer.

The constant enable 167 sends the constant value output on line 164 from the expansion of an instruction to the source 1 bus 52 when an enable signal 245 is derived from a NAND gate 246 arranged to receive the enable source 1 signal 247 from the control unit 50. Both the AND gate 185 and the NAND gate 246 receive in addition to the enable signal 247 an input from a NOR gate 248 which receives one input from line 166 indicating that a constant is present in the expanded instruction and a second input 249 which is output from the control unit 50 to control the multiplexer 180 to use the destination field as a source 1 address. This, dependent on an opcode of an instruction, permits some instructions to use the destintation field to specify another source operand.

The processor has a five stage pipeline consisting of

Fetcher 60

Instruction Register 62, Expand 63, Src Mux 180, Enable

Constant 167 and Enable IP 300

Execute Register 301 and ALU 51

Memory Register 302 and Memory Access 303

Write Register 304

A Collision unit 305 keeps a record of instructions which are currently executing and their respective destination addresses. It uses the Src1 183, Src2 151, Enable SR1 182 and Enable SR2 186 signals to determine if a new instruction depends on the result of an instruction still being executed. A Wait signal 306 instructs the Control unit 50 to delay starting the new instruction, until the result of the preceding instruction has arrived. The Collision unit 305 has Target and Reserve signals which are used to inform it that a newly started instruction will store a result in a certain register or pipe location when it completes. The Target signal is from the Dest 150 signal from the Expand 63 unit, and the Reserve signal 307 comes from the Control unit 50.

The operands for an instruction are addressed by the Src1 183 and Src2 151 signals and by the Enable Const 254 and Enable IP 232. The outputs of the Expand unit 62 produce these signals, or other signals from which they are derived. This permits the correct values to be written to the Source1 52 and Source2 53 buses. The source operand values, destination address and an opcode signal 308 are stored in the Execute Register 301 by the Latch ER signal 309. The Opcode ER signal 308 is not necessarily the same signal as the Opcode signal from the Expand unit 63. This is because some program instructions are broken down into twoi or more internal instructions which proceed sequentially. The store to the Execute Register 301 only occurs when the Wait 306 signal is clear, indicating that the instruction does not require the result of an uncompleted instruction. When the Dest signal 150 is written, the Reserve signal 307 is also asserted, so that the Collision unit 305 knows that a result will subsequently be written. Instructions which use the Dest 150 signal as a source operand address, must read this in a separate cycle and this is described later.

At the same time as the source operands are read, the Instruction Pointer 230 is updated to point to the next sequential instruction, by adding the length of the current instruction to it by Adder 310. This is routed through IP Mux 311 and stored by the Latch IP signal 231. When the instruction pointer value is used as Source2 value by asserting Enable IP 232, the Zero signal 312 controls whether the address of the subsequent instruction is sent from the Adder 310, or the value 0 from the Zero unit 312. This is used in branching.

The Source1 and Source 2 values 313 and 314 from the Execute Register 301 are sent to the ALU 51, where they are operated on according to the opcode signal 55. The ALU 51 produces a condition signal 56, which is used by the Control unit 50 during some instructiopns. The output of the ALU 51 is stored in the Memory Register 302 along with the Dest signal 315 and Opcode signal 55 from the Execute Register 301 by using the Latch MR signal 316.

The Temporary result 317 held in the Memory Register 302 is sent to the Memory Access unit 303, along with the opcode signal 325. These determine whether a memory read or write is required. If neither is, the Temporary value 317 is sent unaltered to the Write Register 304 as signal 318. If a read is required, then Read signal 319 is asserted, and the Temporary value 317 is sent to Address signals 240. The Control unit 50 performs a memory read, and the data returned is sent out on a Result signal 318. If a memory write is required, the Temporary value 317 is again sent to Address signals 240. The Value signal 313 from the Execute Register 301 is sent to the Data bus 64. The Write signal 320 is asserted and the Control unit 50 performs a memory write. A memory write will therefore use two stages of the pipeline, as the Execute Register 301 has to hold the value to store, whilst the Memory Register 302 holds the address to write to.

The output of the Memory Access unit 303 is stored in the Write Register 304 along with the Dest signal 321 and Opcode signal 308 from the Memory Register 302 by using the Latch WR signal 322. The opcode signal 323 from this unit is sent to the Control unit 50, which asserts the Latch DR signal 184, if a result is to be stored. The Dest signal 324 from the Write Register 304 contains the register or pipe location to write to, and the value to store is sent to the Result bus 54. This store is also sent to the Collision unit 305 so it can determine that the instruction has completed. The Result bus 54 can also be stored in the Instruction Pointer 230 and the Fetcher 60, to enable branches to execute.

The address multiplexer 242 is controlled by a fetch control signal 251 from the control unit 50 so that the memory is addressed from the fetcher 60 or from the value in the Memory Access Address.

The latch input 100 for the fetcher 60 is derived from AND gate 260 having as its inputs signals 251 and 255 from the control unit which are both enabled when a read from memory is required to fetch a further instruction word from memory.

In use, all control outputs from control unit 50 are initially deasserted. If the More output 107 from the fetcher 60 indicates that a further word is required from memory 41 then a read operation is carried out to load another word into the fetcher 60. If the processor has branched to a new instruction sequence then an adjust output 96 will be provided to indicate that alignment is necessary. After alignment an instruction will be loaded into the instruction register 62, then expanded by unit 63 and an appropriate source or constant values will be supplied onto source 1 or source 2 buses 52 or 53 and an appropriate operation carried out by the ALU 51 under a command signal 261 from the control unit 50.

The processor may execute arithmetic instructions. These have one or two source operands and a single destination operand. All are from the pipe 171 or register file 170 or constant signal 164, and are specified by output signals from the Expand unit 63. Some operations will only have a single source operand and in these cases the value on the Source2 bus 53 is ignored and enable line 186 is not asserted. The source operands are held in the Execute Register 301 with the destination address and opcode. The ALU 51 produces a result which is stored in the Memory Register. The Memory Access unit 303 performs no operation for these instructions, so the result is passed through unchanged to the Write Register 304.

The processor may also execute memory instructions which read or write a 32 bit value from or to memory. For both read and write, two source operands are stored in the Execute Register 301 as with the arithmetic instructions. The ALU 51 adds these two values to generate the address to access, which is then stored in the Memory Register 302. For memory reads, this address is read by the Memory Access unit 303 and the value stored in the Write Register 304. Memory writes are more complex, as three source operands are required. Once the two source operands specifying the address to write to are stored in the Execute Register 301, the Use Dest signal 249 is asserted, so that the Dest signal 150 accesses a further source operand, which is sent on the Source 1 bus 52. This can be stored into the Execute Register 301 when the calculated address is stored in the Memory Register 302. From there it is sent to the Value input of the Memory Access unit 303.

In executing a branch instruction, the processor may change the instruction pointer which is held in Instruction Register 230 so that a different part of the program is executed. Normally the instruction pointer is incremented by the Length signal from unit 127 to point to the next sequential instruction. In an unconditional branch the instruction pointer always changes to a new value. For a conditional branch a condition is specified in order for the instruction pointer to be updated. Procedure calls may be effected, where the address of the next sequential instruction is saved in the register file 170 or pipe 171.

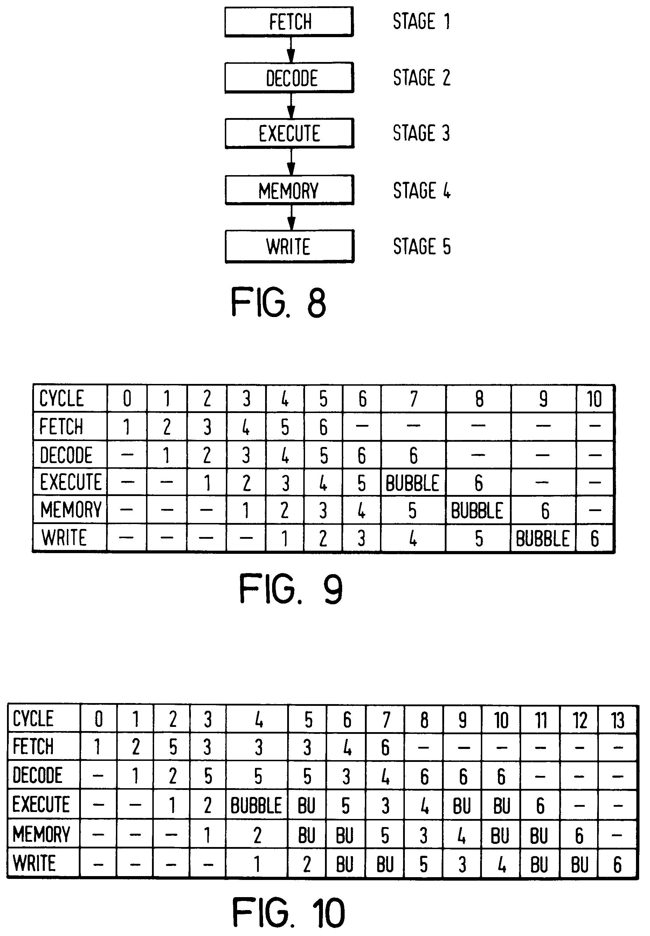

In operation of the processor the execution sequence for each instruction is carried out as a pipelined process. This is shown in Figure 8. In the first stage of the pipeline a fetch operation is carried out when a new word is fetched into the fetcher 60, aligned, loaded into the instruction register 62, and expanded by the expansion unit 63. The second stage is a decode operation in which the instruction decoded to indicate the operation to be carried out as well as identifying the addresses or values to be used in the operation. The correct data lines are enabled within the processor. In the third stage execution is carried out. This may take a varying amount of time depending on the instruction complexity. A fourth stage may involve a memory access. Finally the execution sequence may involve writing the result of the instruction into the relevant destination register if necessary. Each stage is only active for part of the time taken for the overall execution sequence for an instruction. Once the stage has been used for one instruction it is desirable for this stage to immediately proceed to the next sequential instruction. This is done by pipelining the operation of the processor. There is one instruction per stage in execution at any time. In some cases it is not possible to proceed immediately to the next instruction. For instance branch instructions must complete in order for the correct instruction pointer to be determined. Similarly instructions which require the result of a previous instruction may need to wait until that instruction has completed. These instructions are detected in the decode stage and those instructions must be held in that position until the value required is available. This causes a so-called bubble in the pipeline where a stage is not performing any operations.

To reduce such bubbles in the pipeline operation it is advantageous to interleave instruction strings so that when a dependent instruction occurs in a first string requiring the result of execution of a previous instruction in the first string, at least one or more instructions of a second string which are not dependent on the first string are interposed between the dependent instruction and the preceding instruction from which the result is required.

For example, suppose the following calculations were required in a program sequence,

$$Ra = (Ra + Rb) \times (Rc - Rd)$$
$$Re = (Re + Rf)/(Rg - Rh)$$

An instruction sequence which accomplishes this is,

| No | Instruction | | | Action |
|----|-----|---------|---|--------|
| 1 | sub | R2, Rc, Rd | | $R2 = Rc - Rd$ |
| 2 | add | R1, Ra, Rb | | $R1 = Ra + Rb$ |
| 3 | sub | R4, Rg, Rh | | $R4 = Rg - Rh$ |
| 4 | add | R3, Re, Rf | | $R3 = Re + Rf$ |
| 5 | mul | Ra, R1, R2 | | $Ra = R1 \times R2$ |
| 6 | div | Re, R3, R4 | | $Re = R3/R4$ |

Instructions 1, 2 and 5 perform the first calculation and instructions 3, 4 and 6 perform the second.

The sequence of instructions in the above Table has interleaved two strings of instructions. The first string consists of instructions 1, 2 and 5 where instruction 5 is a dependent instruction requiring the result of both instructions 1 and 2 before instruction 5 can be executed. A second string of instructions is formed by instructions 3, 4 and 6 where instruction 6 is a dependent instruction in the second string requiring the result of execution of instructions 3 and 4. In this example the two instruction strings are interleaved into the numerical sequence shown in the Table above. This produces the results shown in Figure 9 of the drawings. This shows eleven cycles of operation in order to execute in the pipeline the sequence of six instructions shown in the above Table. During cycle 0 the first instruction is fetched. During cycle 1 the second instruction is fetched and the first instruction is decoded. During cycle 2 the third instruction is fetched while the second instruction is decoded and the first instruction is executed. During cycle 3 the fourth instruction is fetched while the third instruction is decoded, the second instruction is executed and the first instruction may be used in a memory access. During cycle 4 the fifth instruction is fetched, the fourth is decoded, the third is executed, the second may be used in a memory access and the result of the first instruction is written to a data store. In the Table above this is designated as register R2. In cycle 5 instruction 6 is fetched, instruction 5 is decoded, instruction 4 is executed, instruction 3 may be used for a memory access and the result of instruction 2 is written to a data store which is indicated in the Table as register R1. During cycle 6 no further instructions of these strings remains to be fetched although a new instruction string may now be commenced. Instruction 6 is decoded and instruction 5 is executed. Instruction 5 is a dependent instruction but by this cycle the results of the preceding instructions 1 and 2 are already written into data storage locations and consequently instruction 5 can be executed without any bubble occurring. Instruction 4 may be used in a memory access and the result of instruction 3 is written to a data store which is indicated in the Table as register R4. During cycle 7 instruction 6 must stay in the decode stage as the decode circuitry detects that instruction 6 is also a dependent instruction which requires the results of instructions 3 and 4 which are not yet available. Consequently a bubble occurs in the execute stage during cycle 7 while instruction 5 may be used for a memory access and the result of instruction 4 is written to a data store which is indicated in the Table as register R3. During cycle 8 instruction 6 can proceed to the execute stage as the results of the preceding instructions 3 and 4 are now available. A bubble arises in the memory access stage during cycle 8 but the result of instruction 5 is now written to a data store which in the Table above is indicated as register Ra. During cycle 9 instruction 6 proceeds to the memory access stage and no change occurs in the write stage thereby causing a bubble. During cycle 10 the result of memory 6 is written to a data store which in the above Table is indicated as register Re.

It will therefore be seen that the sequence of six instructions shown in the above Table is completed with only three bubbles in Figure 9. If the instructions had not been interleaved in accordance with the invention the result would be as shown in Figure 10. This shown the position if the first instruction string consisting of instructions 1, 2 and 5 of the above Table were first executed in sequence and then followed by the second instruction string consisting of instructions 2, 3 and 6 in sequence. It will be seen from Figure 9 that if instruction 5 is fetched after instruction 2 it is held in the decode stage for three cycles causing two bubbles in the execute stage during cycles 4 and 5 as the results of instructions 1 and 2 are not available until cycle 6. Similarly when instruction 6 follows instruction 4 it is held in the decode stage for three cycles 8, 9 and 10 as it cannot progress to the execute stage until cycle 11 when the the results of instructions 3 and 4 are available. This causes 12 bubbles in the Table of Figure 10 compared with 3 bubbles in the Table of Figure 9. Furthermore it has required 14 cycles of the pipelined processor operation to execute the six instructions rather than 11 cycles of operation in the interleaved situation shown in Figure 9.

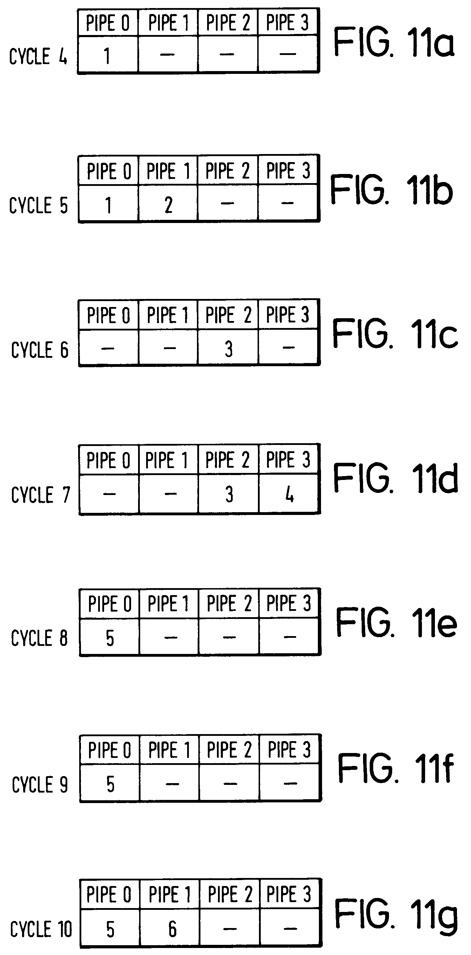

Although the above Table indicated separately addressable registers for writing the results of instructions in the sequence the present invention writes the results of executing the above described instruction strings into a multivalue data store arranged to hold simultaneously a plurality of values on a first in first out basis. This is provided by the pipe 171 in this example. It will be appreciated that as the results of execution of instructions 1, 2, 3, 4, 5 and 6 are produced in sequence they will be written into the first in first out data store in the same sequence and consequently the results of the earlier instructions can be obtained from the data store in the same sequence for use by later dependent instructions. This is illustrated in the sequence of Figures 11a-11g. These Figures represent the cyclic change in data in the pipe 171 during cycles 4 to 10 of the chart shown in Figure 9. During cycle 4 the result of instruction 1 occupies locations 0 in the pipe. In the next cycle 5 the result of instruction 1 remains in location 0 and the result of instruction 2 is written into location 1. During cycle 6 the result of instruction 3 is written into location 2 but execution of instruction 5 causes removal of the stored values in locations 0 and 1. During cycle 7 the result of instruction 3 remains in location 2 and the result of instruction 4 is written into location 3. During cycle 8 the result of instruction 5 is written into instruction 0 and due to the execution of

EP 0 689 130 A1

instruction 6 it removes the results of instructions 3 and 4 which were held in locations 2 and 3. In cycle 9 there is a bubble in the write stage so that no change occurs in the data held in the pipe. During cycle 10 the result of instruction 6 is written into location 1 in the pipe while the pipe still holds the result of instruction 5 in location 0.

It will be appreciated that the pipe 171 may be an explicitly addressed data store in which case the destination registers indicated for the six instructions in the above Table will all be a common address of the pipe 171 and in that event cyclic writing into and reading from the pipe 171 will be effected to write the data into and remove it from the pipe locations illustrated in Figures 11a to 11g. The encoding to achieve the two interleaved instruction strings of the above Table is set out later in this specification and it can be seen that the encoding can be achieved in 16 bytes whereas the use of separate explicitly addressed registers would require 24 bytes. In the case of using an implicit pipe 171, the selectors shown in Figure 6 will cause the execute and write stages of the above described pipeline to obtain data out of the pipe for execution and insert results into the pipe after execution in order to achieve the cyclic writing and removal of data from the pipe as shown in Figure 11a to 11g.

In a further embodiment, instead of using a counter to provide cyclic selection of storage locations for the input of data to the pipe 171, a first in first out buffer may be used in which data already in the buffer is advanced to a new location within the buffer as new data is put into the buffer. In such a case a single counter may be used to operate the output selectors for reading data from the first in first out buffer onto the source 1 and source 2 buses. The output will then be taken from a position within the buffer corresponding to that which has held data for the longest time.

An instruction set which may be used in the example described is as follows:

TABLE B

| Opcode | Mnemonic | Operands | | | Name |
|---|---|---|---|---|---|
| 1 | mov | Result | | Value | Move |
| 2 | add | Result | Value1 | Value2 | Add |
| 3 | sub | Result | Value1 | Value2 | Subtract |
| 4 | mul | Result | Value1 | Value2 | Multiply |
| 5 | div | Result | Value1 | Value2 | Divide |
| 6 | ldv | Result | Base | Index | Load Vector |
| 7 | stv | Value | Base | Index | Store Vector |
| 8 | j | | | Target | Jump |
| 9 | jnz | Value | | Target | Jump Not Zero |
| 10 | call | Result | | Target | Call |
| 11 | eq | Result | Value1 | Value2 | Equal To |
| 12 | gt | Result | Value1 | Value2 | Greater Than |
| 13 | and | Result | Value1 | Value2 | And |
| 14 | or | Result | Value1 | Value2 | Or |
| 15 | xor | Result | Value1 | Value2 | Exclusive Or |
| 16 | sl | Result | Value | Amount | Shift Left |
| 17 | sr | Result | Value | Amount | Shift Right |

The operands are given descriptive names. Some instructions have less than three operands and they consequently have blanks for the omitted ones. It is understood that a special value will be given to these omitted operands which permit them to be eligible for omission in the compressed instruction. The uncompressed instruction format selected for an instruction (Formats 12 to 15) depends on the operands selected by the programmer. For instance the Move instruction could select a register or the pipe for the Result operand and a register, pipe or constant value for the Value operand. If the Value is not a constant,

13

then Format 12 can be used. The Result address held in Field 2, a special value filled in for Field 3 and the Value address put in Field 4. If the Value operand is a constant then Formats 13 and 14 could be used, depending on the length of the constant. If the Value operand is a constant and the Result operand is the pipe, then Format 15 can be used, in addition to Formats 13 and 14. Once an uncompressed format has been chosen, it can be compressed as the Figure 2 permits. A similar strategy can be used for the other instructions.

The values specified by Operand2 and Operand3 are put on the Source 2 bus 53 and the Source 1 bus 52 respectively. The instruction then performs its function. Finally the Result bus 54 will be stored in the location specified by the Result operand, if there is one.

The significance of these instructions is as follows:

| | |
|---|---|
| **Move** | The value on Source 1 signal 313 is copied to the result 328. The Memory Access unit 303 passes signal 317 through to 318 unchanged. |
| **Add** | The value on the Source 1 signal 313 is added to the value on the Source 2 signal 314. The memory Access unit 303 passes signal 317 through to 318 unchanged. |
| **Subtract** | The value on the Source 2 signal 314 is subtracted from the value on the Source 1 signal 313. The Memory Access unit 303 passes signal 317 through to 318 unchanged. |
| **Multiply** | The value on the Source 1 signal 313 is multiplied by the value on the Source 2 signal 314. The Memory Access Unit 303 passes signal 317 through to 318 unchanged. |
| **Divide** | The value on the Source 1 signal 313 is divided by the value on the Source 2 signal 314. The Memory Access unit 303 passes signal 317 through to 318 unchanged. |
| **Load Vector** | The source 1 signasl 313 is scaled and added to the source 2 signal 314. The Memory Access unit 303 performs a memory read at the location on Temp signal 317. The value read is output on Result signal 318, and then stored in the destination location. |
| **Store Vector** | The source 1 signal 313 is scaled and added to the Source 2 signal 314. Concurrently with this, the instruction is held in the Instruction Register 62 for an extra cycle. The Dest signal 150 is routed through the Src Mux 180 to obtain the value to write to memory. This is copied from the Source 1 bus 52 into the Execute Register 301 when the address is stored in the Memory Register 302. The Memory Access unit 303 uses the Temp signal 317 to address memory and the Value signal 313 to write. It performs a memory write operation. There is no destination register for this instruction. |
| **Jump** | Enable IP signal 232 is asserted and either the incremented instruction Pointer 230 value or the value 0 is put on the Source 2 bus 53 by the use of Zero signal 312. Zero signal 312 is set, if HC signal 166 is clear. Source 1 bus 52 obtains either the constant value 164, or the value addressed by Src1 signal 152. In the second stage of execution the ALU 51 adds Source1 value 313 to Source2 value 314. This is passed through the Memory Access unit 303 unchanged and then stored in the Instruction Pointer 230 and Fetcher 60 by the Begin signal 102 and Latch IP signal 231. The Fetcher 60 is instructed to start fetching a new sequence of instructions. During this execution, subsequent sequential instructions are not loaded into the Instruction Register 62. |
| **Jump Not Zero** | As with Jump, a target address is calculated and stored in the Memory Register as an intermediate stage. While this is being done, the value addressed by Operand 1 held on the Dest signal 150, is routed through the Src Mux 180 to obtain a value ont he Source 1 bus 52. When the target address is stored in the Memory Register 302, this can be stored in the Execution Register 301. During the next cycle, the Condition signal 56 from the ALU can be checked to see if the branch should proceed. If it should do, the target address is stored in the Instruction Pointer 230 and Fetcher 60 as with the Jump instruction, when the target address has been copied through the Memory Access unit 303 into the Write Register 304. If the branch is not to occur, no subsequent store occurs, and sequential execution can continue. |
| **Call** | For a call it is necessary to save the next sequential Instruction Pointer value in the register file 170 or pipe 171. The first stage of the call instruction is the same as the jump instruction, in that the incremented Instruction Pointer 230 or Zero signal 312 |

is sent to the Source 2 bus 53 and the Const signal 164 or value from the Register File 170 or Pipe 171 is sent to Source 1 bus 52. These are stored in the Execute Register 301 and added during the next cycle. Concurrent with that addition, the call instruction is held in the Instruction Register 62 or a further cycle. This permits the incremented Instruction Pointer value to be written to Source 2 bus 53. This is the address of the next sequential instruction, as the Instruction Pointer 230 has not yet been updated. This value and the Dest signal 150 are stored in the Execute Register 301 when the result of the ALU 51 has been written to the Memory Register 302. The next cycle copies the Memory Register 302 through the Memory Access unit 303 to the Write Register 304. The ALU 51 copies the Source 2 signal 314 through to the Memory Register 302. Subsequently the Instruction Pointer 230 and Fetcher 60 are updated with the new instruction sequence address. In a subsequent cycle the original Instruction Pointer value will be in the Write Register 304 and so this can be stored in the destination location, which will be in the Register File 170 or Pipe 171.

**Equal To**      The value on the Source 1 signal 313 is compared with the value on the Source 2 signal 314. A value of 1 is output, if they are equal, otherwise a value of 0 is output on signal 328. The Memory Access unit 03 passes signal 317 through to 318 unchanged.

**Greater Than**      The value on the Source 1 signal 313 is compared with the value on the Source 2 signal 314. A value of 1 is output, if Source 2 is greater than Source 1, otherwise a value of 0 is output on signal 328. The Memory Access unit 303 passes signal 317 through to 318 unchanged.

**And**      The value on the Source 1 signal 313 is logically anded with the value on the Source 2 signal 314. The Memory Access unit 303 passes signal 317 through to 318 unchanged.

**Or**      The value on the Source 1 signal 313 is logically ORed with the value on the Source 2 signal 314. The Memory Access unit 303 passes signal 317 through to 318 unchanged.

**Exclusive Or**      The value on the Source 1 signal 313 is logically exclusively ORed with the value on the Source 2 signal 314. The Memory Access unit 303 passes signal 317 through to 318 unchanged.

**Shift Left**      The value on the Source 1 signal 313 is shifted left (towards the most significant end) by the value on the Source 2 signal 314. The Memory Access unit 303 passes signal 317 through to 318 unchanged.

**Shift Right**      The value on the Source 1 signal 313 is shifted right (towards the least significant end) by the value on the Source 2 signal 314. The Memory Access unit 303 passes signal 317 through to 318 unchanged.

It will be seen that instructions used in accordance with this example are compressed so that they may have a length of 1, 2, 3 or 4 bytes. The use of these compressed instructions provides greater code density and the comparison with a prior art instruction set of the type shown in Figure 1 can be seen from the following examples where the heading 'Conventional' relates to instructions of the type shown in Figure 1 and 'This Example' relates to the example described above. A $^{(*)}$ is used to designate the omission of an address in a selected field of the instruction, thereby indicating the use of the implicit pipe 171.

**Single Addition of Registers**

If the desired operations is,

$$R3 = R2 + R1$$

where R1, R2 and R3 are register addresses denoting locations in the register file 170.

**Conventional**

A single instruction accomplishes the operation.

| No | Assembly |
|---|---|
| 1 | add R3,R2,R1 |

**This Example**

A single instruction accomplishes the operation.

| No | Assembly | Encoding | | | | | | | Format |
|---|---|---|---|---|---|---|---|---|---|
| | | L | T | Field 1 | Field 2 | Field 3 | Field 4 | PAD | |
| 1 | add R3,R2,R1 | 3 | 0 | Add | R3 | R2 | R1 | 0 | 12 |

As all operands must be supplied, this is encoded into four bytes.

**Single Addition of Implicit Location**

If the desired operation is to add two values, specified implicitly, and store the result in an implicit location.

**Conventional**

There is no meaning to this operation

**This Example**

A single instruction accomplishes the operation.

| No | Assembly | Encoding | | | | | | | Format |
|---|---|---|---|---|---|---|---|---|---|
| | | L | T | Field 1 | Field 2 | Field 3 | Field 4 | PAD | |
| 1 | add ",","," | 0 | | add | | | | | 1 |

As none of operands need be supplied, this is encoded in one byte.

**Vector Addition**

If the desired operation is

$$Ra [Ri] = Ra [Ri] + Rb [Ri]$$

Where registers Ra and Rb hold the base addresses of two arrays and register Ri holds an index to use.

16

**Conventional**

Four instructions are required, using 16 bytes.

| No | Assembly |
|----|----------|
| 1 | ldv R1,Ra,Ri |
| 2 | ldv R2,Rb,Ri |
| 2 | add R1,R1,R2 |
| 4 | stv R1,Ra,Ri |

**This Example**

Four instructions are required, however some of the operands can be omitted, and so only ten bytes are required.

| No | Assembly | Encoding | | | | | | | Format |
|----|----------|---|---|---------|---------|---------|---------|-----|--------|
| | | L | T | Field 1 | Field 2 | Field 3 | Field 4 | PAD | |
| 1 | ldv *,Ra,Ri | 2 | 1 | ldv | | Ra | Ri | 0 | 8 |
| 2 | ldv *,Rb,Ri | 2 | 1 | ldv | | Rb | Ri | 0 | 8 |
| 3 | add *,*,* | 0 | | add | | | | | 1 |
| 4 | stv *,Ra,Ri | 2 | 1 | stv | | Ra | Ri | 0 | 8 |

**Equation Evaluation**

If the desired operation is

$$Ra = (Ra + Rb) \times (Rc + Rd)$$

where Ra, Rb, Rc and Rd are register locations.

**Conventional**

Three instructions encoded in 12 bytes and using two temporary registers are required.

| No | Assembly |
|----|----------|
| 1 | add R1,Ra,Rb |
| 2 | add R2,Rc,Rd |
| 3 | mul Ra,R1,R2 |

**This Example**

Three instructions are required, but as some operands can be omitted, 8 bytes are needed.

| No | Assembly | Encoding | | | | | | | Format |
|----|----------|---|---|---------|---------|---------|---------|-----|--------|
| | | L | T | Field 1 | Field 2 | Field 3 | Field 4 | PAD | |
| 1 | add *,Ra,Rb | 2 | 1 | add | | Ra | Rb | 0 | 8 |
| 2 | add *,Rc,Rd | 2 | 1 | add | | Rc | Rd | 0 | 8 |
| 3 | mul Ra,*,* | 1 | 0 | mul | Ra | | | | 2 |

**Interleavedf Equation Evaluation**

If the desired operation is

$$Ra = (Ra + Rb) \times (Rc - Rd)$$
$$Re = (Re + Rf)/(Rg - Rh)$$

**Conventional**

Six instructions and four temporary registers are required. This takes 24 bytes to encode.

| No | Assembly |
|----|----------|
| 1 | sub R1,Rc,Rd |
| 2 | add R2,Ra,Rb |
| 3 | sub R3,Rg,Rh |
| 4 | add R4,Re,Rf |
| 5 | mul Ra,R2,R1 |
| 6 | div Re,R4,R3 |

**This Example**

Six instructions are required, but the four temporary values can be held in the pipe so only 16 bytes are required to encode the sequence.

| No | Assembly | Encoding | | | | | | | Format |
|----|----------|---|---|---------|---------|---------|---------|-----|--------|
| | | L | T | Field 1 | Field 2 | Field 3 | Field 4 | PAD | |
| 1 | sub *,Rc,Rd | 2 | 1 | sub | | Rc | Rd | 0 | 8 |
| 2 | add *,Ra,Rb | 2 | 1 | add | | Ra | Rb | 0 | 8 |
| 3 | sub *,Rg,Rh | 2 | 1 | sub | | Rg | Rh | 0 | 8 |
| 4 | add *,Re,Rf | 2 | 1 | add | | Re | Rf | 0 | 8 |
| 5 | mul Ra,*,* | 1 | 0 | mul | Ra | | | | 2 |
| 6 | div Re,*,* | 1 | 0 | div | Re | | | | 2 |

18

**Interated Vector Interleaving**

If the desired operation is

$$Ra [Ri] = (Ra [Ri] + Rb [Ri]) \times (Rc [Ri] - Rd [Ri])$$
$$Re [Ri] = (Re [Ri] + Rf [Ri])/(Rg [Ri] - Rh [Ri])$$

Where registers Ra though Rh hold the base address of 8 arrays of size 1000 entries and register Ri contains an index ranging from 0 though 999.

**Conventional**

21 instructions are required, with 14 temporary registers encoded in 84 bytes

| No | Assembly |
| --- | --- |
| 1 | movRi,999 |
| 2 | movRt,1000 |
|  | LABEL: |
| 3 | sub Rt,Rt,1 |
| 4 | ldv R0,Rd,Ri |
| 5 | ldv R1,Rc,Ri |
| 6 | ldv R2,Rb,Ri |
| 7 | ldv R3,Ra,Ri |
| 8 | sub R8,R1,R0 |
| 9 | add R9,R3,R4 |
| 10 | ldv R4,Rh,Ri |
| 11 | ldv R5,Rg,Ri |
| 12 | mul R12,R9,R8 |
| 13 | sub R10,R5,R4 |
| 14 | ldv R6,Rf,Ri |
| 15 | ldv R7,Re,Ri |
| 16 | stv R12,Ra,Ri |
| 17 | add R11,R7,R6 |
| 18 | div R13,R11,R10 |
| 19 | sub Ri,Ri,1 |
| 20 | stv R13,Re,Rt |
| 21 | jnz Rt,LABEL |

**This Example**

21 instructions are required, but because of the instruction compression only these can be encoded in 56 bytes.

| No | Assembly | Encoding | | | | | | | Format |
|----|----------|---|---|---------|---------|---------|---------|-----|--------|
| | | L | T | Field 1 | Field 2 | Field 3 | Field 4 | PAD | |
| 1 | movRi,999 | 3 | 2 | mov | Ri | 7 | 0 | 15 | 14 |
| 2 | movRt,1000 | 3 | 2 | mov | Rt | 8 | 0 | 15 | 14 |
| | LABEL: | | | | | | | | |
| 3 | sub Rt,Rt,1 | 3 | 1 | sub | Rt | Rt | 1 | 0 | 13 |
| 4 | ldv *,Rd,Ri | 2 | 1 | ldv | | Rd | Ri | | 8 |
| 5 | ldv *,Rc,Ri | 2 | 1 | ldv | | Rc | Ri | | 8 |
| 6 | ldv *,Rb,Ri | 2 | 1 | ldv | | Rb | Ri | | 8 |
| 7 | ldv *,Ra,Ri | 2 | 1 | ldv | | Ra | Ri | | 8 |
| 8 | sub *,*,* | 0 | | sub | | | | | 1 |
| 9 | add *,*,* | 0 | | add | | | | | 1 |
| 10 | ldv *,Rh,Ri | 2 | 1 | ldv | | Rh | Ri | | 8 |
| 11 | ldv *,Rg,Ri | 2 | 1 | ldv | | Rg | Ri | | 8 |
| 12 | mul *,*,* | 0 | | mul | | | | | 1 |
| 13 | sub *,*,* | 0 | | sub | | | | | 1 |
| 14 | ldv *,Rf,Ri | 2 | 1 | ldv | | Rf | Ri | | 8 |
| 15 | ldv *,Re,Ri | 2 | 1 | ldv | | Re | Ri | | 8 |
| 16 | stv *,Ra,Ri | 2 | 1 | stv | | Ra | Ri | | 8 |
| 17 | add *,*,* | 0 | | add | | | | | 1 |
| 18 | div *,*,* | 0 | | div | | | | | 1 |
| 19 | sub Ri,Ri,1 | 3 | 1 | sub | Ri | Ri | 1 | 0 | 13 |
| 20 | stv *,Re,Rt | 2 | 1 | stv | | Re | Rt | | 8 |
| 21 | jnz Rt,LABEL | 3 | 2 | jnz | R2 | 16 | 63 | 15 | 14 |

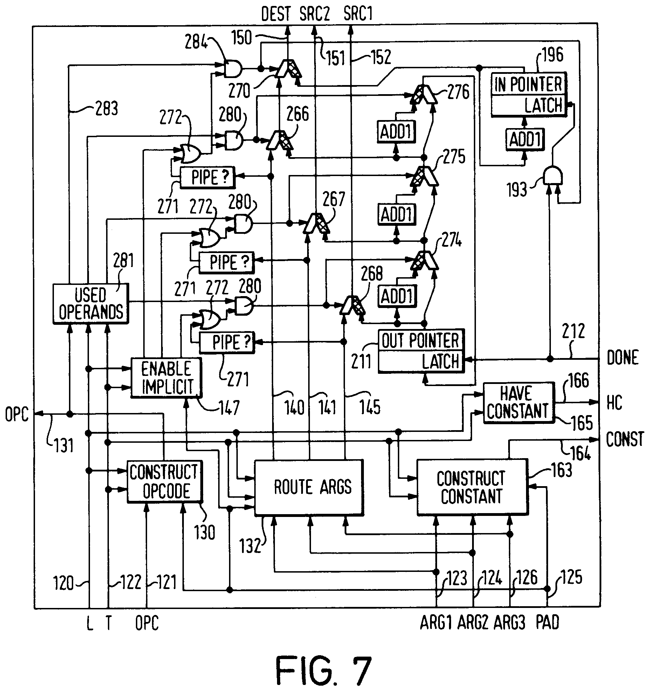

The invention is not limited to the details of the foregoing examples. Figure 7 illustrates an alternative arrangement to replace Figures 5 and 6. In this alternative, the expansion unit 63 is arranged to provide source and destination addresses which are cyclical so that they may operate on a first in first out basis and use some of the register locations in place of the pipe 171. Similar components in Figure 7 to those already described in Figures 5 and 6 have been marked with the same reference numerals and their function will not be repeated. In this case the In Pointer 196 and Out Pointer 211 are latches which can hold a number between N and N+M-1 inclusive. These are the register numbers in the register file 170 which can be used as a circular buffer to replace the requirement for the separate pipe 171. In this way the source and destination selectors on the register file 170 can select some of the registers in a normally addressed manner and other registers will be accessed on a cyclical circular buffer basis. The outputs 140, 141 and 145 from the router 132 are provided respectively to multiplexers 266, 267 and 268. Multiplexer 268 is arranged to provide the source 1 output signal 152. Multiplexer 267 provides the output signal for source 2 and multiplexer 266 provides an output to a further multiplexer 270 which has as its output the destination address. Each of the output signals 140, 141 and 145 is fed to a similar comparator circuit 271 which compares the register numbers for each operand from the router 132 and asserts a signal if it matches the special register number denoting the pipe. This special register number is defined to be any of the M registers making up the circular buffer as they do not need to be directly accessed. The output of comparators 271 are each fed to an OR gate 272 having as a second input a signal from the enable implicit circuit 147. Multiplexer 268 has a second input from the Out Pointer 211. The multiplexer 267 has a second input from a multiplexer 274 arranged to receive either the output of pointer 211 or an increment of 1 to that pointer value. Similarly multiplexer 266 receives an input from a multiplexer 275 which receives an output from multiplexer 274 or an increment of 1 on that value.

The input address to pointer 211 is derived from a multiplexer 276 which has as its inputs either the output of multiplexer 275 or an increment of 1 on that output value. The OR gates 272 are arranged to provide a first output to a respective AND gate 280 arranged to receive a second input from a Used operands circuit 281. The Used operand 281 receives inputs of the opcode signal 131 as well as the length and type signals 120 and 122. Outputs from circuit 281 indicate which of the three Operands are sources and which is the destination. Its outputs are fed to the AND gates 280 to permit appropriate selection of the multiplexers 268, 267 and 266. A further output 283 from the used Operand circuit 281 is fed to a further AND gate 284 which receives a second input from the OR gate 272. This controls the multiplexer 270 to permit the destination output to be derived either from the in pointer 196 or from the multiplexer 266. It will be seen that each of the ADD one units performs a modulo addition of the input signals so that when presented with the value N + M-1 the result is N. The Done signal 212 controls latching of the Out pointer 211 and In pointer 196 so as to update these pointers when execution of an instruction is completed. AND gate 193 only allows update of In Pointer 196 when a value has been read from the pipe, as indicated by AND gate 284. In this way selected registers in the register file may be used as a circular buffer to act as a first in first out multiple value data store and by use of the enable implicit circuit 147 this may be effected even when the length and type signals 120 and 122 indicate that a source or destination address is omitted in the compressed instruction.

In the examples described with reference to Figure 2, any omitted field is deemed to represent the implicit store provided by the pipe 171. In this way, when the compressed instruction is expanded the omitted field is replaced by a value representing the address of the pipe 171. However, in an alternative embodiment an omitted field may be deemed to take the same value as one of the included fields. The length and type indicators used in the instruction format may indicate that the value of one of the included fields is to be repeated on expansion of the instruction to provide the same output value for that field as a designated one of the included fields. The instruction format may use bit values in the length and type indicator as well as possibly the PAD section of the instruction format in order to indicate which of the included fields is to have its value repeated and which omitted field is to take that repeated value. In Figure 2 any of formats 6 to 11 have enough bits in the Opcode extension positions (bits numbers 22 or 23) to provide an indication that the expansion unit should copy the value of one of the included fields into an omitted field.

## Claims

1. A method of operating a computer system wherein instructions are each executed in a multistore pipelined operation, said instructions comprising a first string of instructions including at least one dependent instruction which requires a result of execution of a preceding instruction in said first string, and a second string of instructions which are not dependent on the result of execution of instructions in said first string, said method comprising effecting successive stages of said pipelined operation on successive instructions, with a plurality of instructions in the pipeline simultaneously, writing sequential results of instruction execution into a data store arranged to hold simultaneously more than one result on a first in first out basis, and interleaving execution of instructions of said second string with instructions of said first string, thereby interposing at least one instruction of said second string between said dependent and said preceding instructions of said first string in the pipelined operation, execution of said dependent instruction including obtaining from said data store a value derived from a result of execution of said preceding instruction.

2. A method of executing a sequence of computer instructions, each of said instructions being processed sequentially in one multistage pipelined operation including execution of each instruction and writing a result of execution, wherein said sequence includes a first string of instructions including at least one dependent instruction which requires a result of execution of a preceding instruction in said first string, and a second string of instructions which are not dependent on the result of execution of instructions in said first string, said first and second instruction strings are interleaved in said pipelined operation whereby the operation is started on each successive instruction before completion of an earlier instruction and at least one instruction of said second string is interposed between said dependent and said preceding instructions of said first string in the pipelined operation, said writing comprises loading a plurality results into a data store arranged to hold more than one result simultaneously on a first in first out basis, and execution of said dependent instruction including obtaining from said data store a value derived from a result of exeuction of said preceding instruction.

3. A method according to any one of the preceding claims wherein each of said first and second strings of instructions includes at least one dependent instruction which requires a result of execution of a preceding instruction in the same string, said first and second strings being interleaved so that between execution of said dependent and preceding instruction in each string there is interposed an instruction of the other string, thereby providing in said data store the result of said preceding instruction for each string before execution of the dependent instruction in the same string.

4. A method according to any one of the preceding claims in which instructions in said first and second strings are interleaved in such a manner that the result of execution of a said preceding instruction is output from said data store in synchronism with execution of said dependent instruction of the same string.

5. A method according to any one of claims 1 to 4 wherein data required for the execution of one instruction is removed from said data store concurrently with writing the result of execution of a different instruction into said data store.

6. A method according to any one of the preceding claims wherein said data store comprises an implicit storage location not requiring address identification in the or each instruction.

7. A method according to claim 6 wherein said implicit storage location comprises a first in first out buffer.

8. A method according to claim 6 or claim 7 wherein at least one instruction in said instruction sequence includes no address identification for data storage and logic circuitry in the computer system responds to said at least one instruction to access said implicit storage location.

9. A method according to claim 8 wherein said implicit storage location is arranged to provide a source of data for use in execution of an instruction.

10. A method according to any one of the preceding claims in which said data store is provided by a plurality of registers and said registers are sequentially addressed during execution of a succession of instructions to provide access to said data storage location on a first in first out basis.

11. A computer system comprising memory for storing a plurality of instructions and processing circuitry connected to said memory for receiving instructions from said memory and executing them in sequence, said processing circuitry including multistage pipelined circuitry having decoding circuitry, execution circuitry and writing circuitry for writing a result of successive instructions executed by the processing circuitry, and a first in first out data store for holding simultaneously more than one result of an instruction execution, said data store being connected to said pipelined circuitry both to receive results of successive instruction executions and to provide a source of data for use by said execution circuitry.

12. A computer system according to claim 11 including flow control circuitry for controlling flow of successive instructions through successive stages of said pipelined circuitry whereby successive instructions may be supplied to the pipelined circuitry before completion of execution of preceding instructions in the instruction sequence, and instructions are supplied one at a time to said execution and writing circuitry.

13. A computer system according to claim 11 or 12 wherein said processing circuitry includes logic circuitry arranged to access said data store in response to an instruction having no data store address indication.

14. A computer system according to any one of claims 11 to 18 wherein said data store comprises a first in first out buffer.

15. A computer system according to any one of claims 11 to 13 wherein said data store comprises a plurality of separately addressable registers and addressing circuitry is provided to sequentially address said registers to operate on a first in first out basis as a succession of instructions are executed.

| OPCODE | DEST | SOURCE1 | SOURCE 2 |

## FIG.1
PRIOR ART

# FIG. 2

**COMPRESSED**

| FORMAT NUMBER | LENGTH | | TYPE | | | | | | | EXPAND TO |
|---|---|---|---|---|---|---|---|---|---|---|
| 1 | 0 0 | FIELD 1 | | | | | | | | 12 |
| 2 | 1 0 | FIELD 1 | 0 0 | FIELD 2 | | | | | | 12 |
| 3 | 1 0 | FIELD 1 | 1 0 | FIELD 3 | | | | | | 12 |
| 4 | 1 0 | FIELD 1 | 0 1 | FIELD 4 | | | | | | 12 |
| 5 | 1 0 | FIELD 1 | 1 1 | FIELD 4 | | | | | | 13 |
| 6 | 0 1 | FIELD 1 | 0 0 | FIELD 2 | FIELD 3 | 6 0 | | | | 12 |
| 7 | 0 1 | FIELD 1 | 0 0 | FIELD 2 | FIELD 4 | 6 1 | OPCODE | | | 12 |
| 8 | 0 1 | FIELD 1 | 1 0 | FIELD 3 | FIELD 4 | 6 7 | | | | 12 |
| 9 | 0 1 | FIELD 1 | 0 1 | FIELD 2 | FIELD 4 | 6 0 | | | | 13 |
| 10 | 0 1 | FIELD 1 | 0 1 | FIELD 3 | FIELD 4 | 6 1 | OPCODE | | | 13 |
| 11 | 0 1 | FIELD 1 | 1 1 | FIELD 2 | FIELD 3 | 6 7 | | | | 15 |

**UNCOMPRESSED**

|  | FIELD 1 | FIELD 2 | FIELD 3 | | FIELD 4 |
|---|---|---|---|---|---|
| 12 | 1 1 0 OPCODE 5 | 0 0 0 OP1 REG 5 | 0 OP2 REG 5 | 6 OPC 9 | 0 OP3 REG 5 |
| 13 | 1 1 0 OPCODE 5 | 1 0 0 OP1 REG 5 | 0 OP2 REG 5 | 6 OPC 9 | 0 OP3 CONST 5 |
| 14 | 1 1 0 OPCODE 5 | 0 1 OP1 REG 5 | 0 OP3 CONST 15 | | |
| 15 | 1 1 0 OPCODE 5 | 1 1 0 | OP3 CONST 21 | | |

BYTE 0    BYTE 1    BYTE 2    BYTE 3

BIT NUMBERS 0 1 2 3 4 5 6 7 8 9 10 11 12 13 14 15 16 17 18 19 20 21 22 23 24 25 26 27 28 29 30 31

FIG. 3(I)

FIG. 3(II)

EP 0 689 130 A1

FIG. 4

FIG. 5

# FIG. 6

EP 0 689 130 A1

FIG. 7

```
┌─────────────┐
│    FETCH    │   STAGE 1
└──────┬──────┘
       │
       ▼
┌─────────────┐
│   DECODE    │   STAGE 2
└──────┬──────┘
       │
       ▼
┌─────────────┐
│   EXECUTE   │   STAGE 3
└──────┬──────┘
       │
       ▼
┌─────────────┐
│   MEMORY    │   STAGE 4
└──────┬──────┘
       │
       ▼
┌─────────────┐
│    WRITE    │   STAGE 5
└─────────────┘
```

# FIG. 8

| CYCLE | 0 | 1 | 2 | 3 | 4 | 5 | 6 | 7 | 8 | 9 | 10 |
|---|---|---|---|---|---|---|---|---|---|---|---|
| FETCH | 1 | 2 | 3 | 4 | 5 | 6 | — | — | — | — | — |
| DECODE | — | 1 | 2 | 3 | 4 | 5 | 6 | 6 | — | — | — |
| EXECUTE | — | — | 1 | 2 | 3 | 4 | 5 | BUBBLE | 6 | — | — |
| MEMORY | — | — | — | 1 | 2 | 3 | 4 | 5 | BUBBLE | 6 | — |
| WRITE | — | — | — | — | 1 | 2 | 3 | 4 | 5 | BUBBLE | 6 |

# FIG. 9

| CYCLE | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| FETCH | 1 | 2 | 5 | 3 | 3 | 3 | 4 | 6 | — | — | — | — | — | — |
| DECODE | — | 1 | 2 | 5 | 5 | 5 | 3 | 4 | 6 | 6 | 6 | — | — | — |
| EXECUTE | — | — | 1 | 2 | BUBBLE | BU | 5 | 3 | 4 | BU | BU | 6 | — | — |
| MEMORY | — | — | — | 1 | 2 | BU | BU | 5 | 3 | 4 | BU | BU | 6 | — |
| WRITE | — | — | — | — | 1 | 2 | BU | BU | 5 | 3 | 4 | BU | BU | 6 |

# FIG. 10

| | PIPE 0 | PIPE 1 | PIPE 2 | PIPE 3 |
|---|---|---|---|---|
| CYCLE 4 | 1 | — | — | — |

FIG. 11a

| | PIPE 0 | PIPE 1 | PIPE 2 | PIPE 3 |
|---|---|---|---|---|
| CYCLE 5 | 1 | 2 | — | — |

FIG. 11b

| | PIPE 0 | PIPE 1 | PIPE 2 | PIPE 3 |
|---|---|---|---|---|
| CYCLE 6 | — | — | 3 | — |

FIG. 11c

| | PIPE 0 | PIPE 1 | PIPE 2 | PIPE 3 |
|---|---|---|---|---|
| CYCLE 7 | — | — | 3 | 4 |

FIG. 11d

| | PIPE 0 | PIPE 1 | PIPE 2 | PIPE 3 |
|---|---|---|---|---|
| CYCLE 8 | 5 | — | — | — |

FIG. 11e

| | PIPE 0 | PIPE 1 | PIPE 2 | PIPE 3 |
|---|---|---|---|---|
| CYCLE 9 | 5 | — | — | — |

FIG. 11f

| | PIPE 0 | PIPE 1 | PIPE 2 | PIPE 3 |
|---|---|---|---|---|
| CYCLE 10 | 5 | 6 | — | — |

FIG. 11g

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | P. M. KOGGE 'The Architecture of Pipelined Computers' 1981 , MCGRAW-HILL , NEW YORK, US * page 222, line 32 - line 41 * * page 300, line 3 - page 301, line 6 * | 1-3,11, 12 | G06F9/38 |
| X | US-A-4 965 724 (UTSUMI ET AL.) 23 October 1990 * abstract * * column 6, line 43 - column 7, line 24 * | 1-3,11, 12 | |
| X | EP-A-0 433 864 (BULL HN INFORMATION SYSTEMS INC.) 26 June 1991 * the whole document * | 1-3,11, 12 | |
| A | US-A-4 853 890 (ABE ET AL.) 1 August 1989 * the whole document * | 4-10, 13-15 | |

TECHNICAL FIELDS
SEARCHED (Int.Cl.6)

G06F

The present search report has been drawn up for all claims

| Place of search | Date of completion of the search | Examiner |
|---|---|---|
| THE HAGUE | 28 September 1995 | Daskalakis, T |

EPO FORM 1503 03.82 (P04C01)